Europäisches Patentamt

European Patent Office

Office européen des brevets

(11) Veröffentlichungsnummer: **0 410 217 A1**

## (12) EUROPÄISCHE PATENTANMELDUNG

(21) Anmeldenummer: **90113325.6**

(22) Anmeldetag: **12.07.90**

(51) Int. Cl.5: **H01J 25/02**

(30) Priorität: **28.07.89 CH 2822/89**

(43) Veröffentlichungstag der Anmeldung:
**30.01.91 Patentblatt 91/05**

(84) Benannte Vertragsstaaten:
**CH DE FR GB IT LI NL**

(71) Anmelder: **ASEA BROWN BOVERI AG**
**Haselstrasse**
**CH-5401 Baden(CH)**

(72) Erfinder: **Jödicke, Bernd, Dr.**
**Im First 10**
**CH-5424 Unterehrendingen(CH)**
Erfinder: **Mathews, Hans-Günter, Dr.**
**Gehrenhagweg 11**
**CH-5422 Oberehrendingen(CH)**

(54) **Quasi-optisches Gyrotron.**

(57) Bei einem quasi-optischen Gyrotron, welches einen quasi-optischen Resonator mit zwei auf einer Resonatorachse (5) einander gegenüberliegende Spiegel (4a,4b) aufweist, wird die gewünschte elektromagnetische Strahlung mit einem Hologramm ausgekoppelt. Dabei weist mindestens einer der beiden Spiegel (4b) des Resonators eine mit einem Hologramm versehene Spiegelfläche (8b) auf. Das Hologramm ist so ausgebildet, dass die auszukoppelnde Strahlung in Richtung mindestens genau einer Auskopplungsachse (10) gestreut wird, wobei die mindestens genau eine Auskopplungsachse (10) mit der Resonatorachse (5) einen vorgegebenen Winkel Á verschiede von null einschliesst. Vorzugsweise ist der Winkel Á so klein wie möglich.

Fig. 2

EP 0 410 217 A1

# QUASI-OPTISCHES GYROTRON

## Technisches Gebiet

Die Erfindung betrifft ein quasi-optisches Gyrotron, umfassend erste Mittel zum Erzeugen eines in Richtung einer Elektronenstrahlachse laufenden Elektronenstrahls, zweite Mittel zum Erzeugen eines parallel zur Elektronenstrahlachse ausgerichteten statischen Magnetfeldes, durch welches die Elektronen des Elektronenstrahls zur Gyration gezwungen werden, einen quasi-optischen Resonator, welcher zwei auf einer senkrecht zur Elektronenstrahlachse ausgerichteten Resonatorachse einander gegenüberliegend angeordnete Spiegel aufweist, in welchem Resonator durch die Gyration der Elektronen ein elektromagnetisches Wechselfeld angeregt wird, und dritte Mittel zum Auskoppeln elektromagnetischer Strahlung aus dem Resonator.

## Stand der Technik

Ein quasi-optisches Gyrotron der eingags genannten Art ist z.B. aus dem Patent CH-664045 oder aus dem Artikel "Das Gyrotron, Schlüsselkomponente für Hochleistungs-Mikrowellensender", H.G. Mathews, Minh Quang Tran, Brown Boveri Review 6-1987, pp. 303-307, bekannt. Dieses Gyrotron hat gegenüber einem konventionellen, zylinrischen Gyrotron den Vorteil, dass es ein Mehrfaches an Leistung erzeugen kann. Der Grund dafür liegt unter anderem in folgenden Tatsachen:

1. Da der Resonator nicht koaxial sondern senkrecht zur Elektronenstrahlachse liegt, kan er unabhängig vom "Elektronenstrahlteil" dimensioniert werden. Insbesondere kann die Strahlungsbelastung von Resonatorspiegel und HF-Fenster durch Vergrössern des Durchmessers herabgesetzt werden.

2. Die im Resonator vorhandene Energie kann über zwei Ausgänge, nämlich bei jedem der beiden Resonatorspiegel, ausgekoppelt werden.

Ein quasi-optisches Gyrotron der genannten Art arbeitet bei Frequenzen von typischerweise 150 GHz und mehr und vermag im Dauerstrichbetrieb Strahlungsleitungen von wenigen 100 kW zu erzeugen. Im Hinblick auf den Einsatz solcher Gyrotrons zur Plasmaheizung in Fusionsreaktoren sind aber Dauerstrichleistungen von 1 MW und mehr erforderlich. Bei der Realisierung solch hoher Leistungen ergeben sich Schwierigkeiten verschiedenster Art. Ein Problem stellt insbesondere die effiziente Auskopplung der Millimeterwellen aus dem Resonator dar.

Aus dem Patent CH-668,865 beispielsweise sind für die Auskopplung aus einem offenen Resonator der eingangs erwähnten Art folgende zwei Vorschläge bekannt: Auskopplung durch ringförmige Schlitze im Resonatorspiegel und Auskopplung am Rand eines Spiegels mit reduziertem Durchmesser. Keiner der beiden Lösungsversuche vermag jedoch zu befriedigen. Wegen den hohen elektrischen Feldstärken, die bei hohen Strahlungsleistungen auftreten, kann es einerseits bei den Kanten der Schlitze zu gefährlichen Durchschlägen kommen. Andererseits werden auf diese Weise keine Gauss'schen Moden ausgekoppelt. Es ist nun aber so, dass gerade nur die Gauss'schen Moden verlustfrei über eine längere Strecke zu einem Verbraucher transportiert werden können.

Im Zusammenhang mit dem Bau von Lasern hoher Leistung ist vorgeschlagen worden, die Auskopplung der Strahlung aus dem optischen Resonator so zu erreichen, dass einer der zwei reflektierenden Resonatorspiegel mit einer periodischen Struktur versehen ist, sodass etwa 20% der Resonatorenergie unter einem gegebenen Winkel seitlich ausgekoppelt wird. Insbesondere ist aus dem Patent US-3,609,585 ein auskoppelnder Spiegel bekannt, welcher periodische, schmale Gräben aufweist, die durch breite, flache Abschnitte getrennt sind. Die Gräben, welche für die Auskopplung verantwortlich sind, sind dabei sägezahnförmig ausgebildet.

Diese aus dem Gebiet der Laserkonstruktion bekannte Lösung, eignet sich jedoch nicht für ein quasi-optisches Gyrotron. Neben den spitzen Kanten sind vorallem auch die wellenoptischen Effekte nachteilig, die bei Millimeterwellen natürlich schon bei relativ grossen Dimensionen (mm-Bereich) zum tragen kommen und zu unerwünschten Beugungsmaxiama resp. -nebenmaxiama führen.

## Darstellung der Erfindung

Aufgabe der Erfindung ist es daher, ein Gyrotron der eingangs genannten Art zu schaffen, bei welchem aus dem quasi-optischen Resonator die gewünschte elektromagnetische Strahlung mit hoher Effizienz ausgekoppelt wird. Insbesondere ist es Aufgabe der Erfindung ein Gyrotron der genannten Art so auszubilden, dass die gewünschte Strahlung in der Form eines Gauss'schen Modes ausgekoppelt wird.

Erfindungsgemäss besteht die Lösung darin, dass die dritten Mittel mindestens ein Hologramm umfassen, welches mindestens eine Hologramm auf einer Spiegelfläche eines der beiden Spiegel des Resonators ist und so beschaffen ist, dass die auszukoppelnde Strahlung in Richtung mindestens genau einer Auskopplungsachse gestreut wird, wobei die mindestens genau eine Auskopplungsachse mit der Resonatorachse einen vorgegebenen Winkel Á verschieden von null einschliesst.

Der Kern der Erfindung liegt darin, dass das Hologramm nicht wie ein herkömmliches Strichgitter stets mehrere Beugungsrichtungen aufweist, in welche die eintreffende Welle, d.h. der Gauss'sche Mode des Resonators, gestreut wird, sondern nur eine im voraus bestimmbare Anzahl von wohldefinierten Streurichtungen. Somit wird die auszukoppelnde Strahlung stets nur in die gewünschte Richtung gelenkt. Ausserdem lassen sich mit dem Hologramm die gewünschten Gauss Wellen erzeugen, die dann ohne nennenswerte Verluste zu einem Verbraucher geführt werden können.

Bei einem quasi-optischen Gyrotron, bei welchem das statische Magnetfeld durch zwei Spulen in Helmholtz-Anordnung erzeugt wird, liegen Resonatorachse und Auskopplungsachse vorzugsweise in einer gemeinsamen Ebene senkrecht zur Elektronenstrahlachse. Der Winkel zwischen Resonator- und Auskopplungsachse ist mit Vorteil gerade so gross, dass die ausgekoppelte Strahlung im wesentlichen ungestört seitlich neben em gegenüberliegenden Spiegel des Resonators passieren kann.

Unter Umständen ist es von Vorteil, mehrere Auskopplungsachsen vorzusehen. Bei dieser Ausführungsform wird die Strahlungsbelastung auf mehrere HF-Fenster verteilt. Die Gesamtleistung des Gyrotrons kann damit bei beschränkter Belastbarkeit der HF-Fenster vervielfacht werden.

Die beschriebene Vervielfachung kann auf verschiedenen Wegen erreicht werden. Entweder wird eine Spiegelfläche mit einem Hologramm versehen, welches z.B. genau zwei Auskopplungsachsen bedient. Oder jeder der beiden Spiegel weist ein Hologramm auf, welches z.B. je genau eine Auskopplungsachse bedient.

Das Hologramm lässt sich im allgemeinen nicht mit konkreten körperlichen Merkmalen umfassend beschreiben. Vielmehr ist es bestimmt durch seine spezifische Eigenschaft, eine gegebene eintreffende Welle unter einem oder mehreren definierten Winkeln zu streuen.

Im wesentlichen ist das Hologramm eine lateral und tiefenmodulierte, elektrisch leitende Spiegelfläche mit einer Strukturgrösse in der Grössenordnung einer Wellenlänge der elektromagnetischen Strahlung.

Eine grosse Zahl von weiteren Ausführungsformen ergibt sich schliesslich aus den Patentansprüchen.

## Kurze Beschreibung der Zeichnung

Nachfolgend soll die Erfindung anhand von Ausführungsbeispielen im Zusammenhang mit der Zeichnung nähe erläutert werden. Es zeigen:

Fig. 1 eine schematische Darstellung eines quasi-optischen Gyrotrons im Längsschnitt;

Fig. 2 eine schematische Darstellung des quasi-optischen Gyrotrons im Querschnitt;

Fig. 3 ein vereinfachter Querschnitt einer Spiegelfläche mit einem Hologramm; und

Fig. 4 eine schematische Frontansicht eines Spiegels mit einem Hologramm.

Die in der Zeichnung verwendeten Bezugszeichen und deren Bedeutung sind in der Bezeichnungsliste zusammenfassend tabelliert. Grundsätzlich sind gleiche Teile mit gleichen Bezugszeichen versehen.

## Wege zur Ausführung de Erfindung

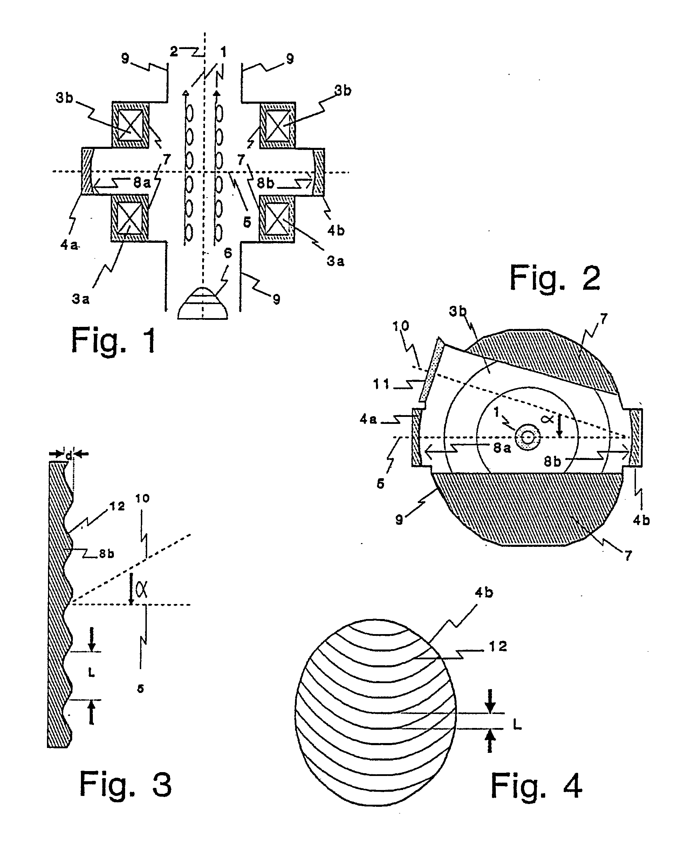

Fig. 1 zeigt eine bevorzugte Ausführungsform der Erfindung. Ein entsprechendes quasi-optisches Gyrotron umfasst erste Mittel 6 zum Erzeugen eines z.B. ringförmigen Elektronenstrahls 1, welcher entlang einer Elektronenstrahlachse 2 läuft. Die genannten ersten Mittel 6 umfassen z.B. eine wohlbekannte Magnetron-Injektions-Kanone. Zwei Spulen 3a, 3b in Helmholtz-Anordnung (d.h. sie haben im wesentlichen einen ihrem Radius entsprechenden gegenseitigen Abstand) erzeugen ein statisches Magnetfeld parallel zur Elektronenstrahlachse 2, sodass die Elektronen des Elektronenstrahls 1 zur Gyration gezwungen werden.

Ein quasi-optischer Resonator, gebildet durch zwei einander auf einer Resonatorachse 5 gegenüberliegend angeordnete Spiegel 4a, 4b, ist zwischen den beiden Spulen 3a, 3b so angeordnet, dass seine Resonatorachse 5 senkrecht zur Elektronenstrahlachse 2 ausgerichtet ist.

Durch die Gyration der Elektronen wird im Resonator ein hochfrequentes elektromagnetisches Wechselfeld angeregt, sodass die gewünschte elektromagnetische Strahlung mit geeigneten Mitteln aus dem Resonator ausgekoppelt und durch ein HF-Fenster und allenfalls einen Wellenleiter an einen Verbraucher abgegeben werden kann. Das HF-Fenster schliesst ein evakuiertes Gefäss 9, in welchem die beschriebenen Teile untergebracht sind, transparent gegenüber dem Aussenraum (z.B. einem Wellenleiter) ab.

Die beiden Spulen 3a, 3b, die starke Kräfte aufeinander ausüben, werden mit Hilfe einer Stützkonstruktion 7 gegeneinander abgestützt. Diese weist für den Resonator geeignete Bohrungen resp.

Freiräume auf. Die Stützkonstruktion 7 kann z.B. ein mit Bohrungen versehener Stahlträger oder ein Stützgerüst aus geeignet angeordneten Titanstäben sein.

Die bis anhin beschriebenen Teile des Gyrotrons sind hinlänglich bekannt (z.B. aus dem eingangs zitierten Stand der Technik). Auf eine ausführliche Erläuterung derselben kann deshalb hier verzichtet werden.

Neu ist hingegen die Art und Weise der Auskopplung. Auf diese wird im folgenden eingegangen.

Fig. 2 zeigt den erfindungsgemässen Resonator im Querschnitt. Bei dieser Darstellung steht die Elektronenachse 2 senkrecht zur Zeichenebene. Hinter resp. in der Stützkonstruktion 7 ist die Spule 3b zu erkennen. Im übrigen sind die bereits anhand der Fig. 1 beschriebenen Teile mit gleichen Bezugszeichen versehen.

Die Spiegel 4a, 4b haben beide einen den Resonator ausfüllenden Querschnitt und sind z.B. kreisförmig. Sie haben je eine metallische oder supraleitende und vorzugsweise sphärisch gekrümmte Spiegelfläche 8a, 8b. Entsprechend einer besonders bevorzugten Ausführungsform weist eine der beiden Spiegelflächen 8b ein Hologramm auf, welches einen Teil des im Resonator schwingenden Wechselfeldes unter einem vorgegebenen Winkel Á auskoppelt.

Das Hologramm auf dem Spiegel 4b koppelt die gewünschte Strahlung aus dem Resonator ausschliesslich unter dem vorbestimmten Winkel Á entlang einer Auskopplungsachse 10 aus. Mit Á wird dabei der Winkel bezeichnet, der von Resonator- und Auskopplungsachse 5 resp. 10 eingeschlossen wird. Er ist eindeutig verschieden von null und zwar so, dass die ausgekoppelte Strahlung seitlich neben dem gegenüberliegenden Spiegel 4a passieren kann. Ein HF-Fenster 11 liegt auf der Auskopplungsachse 10 und schliesst das Gefäss 9 vakuumdicht gegenüber einem koaxial zur Auskopplungsachse 10 angeschlossenen Wellenleiter (in der Figur nicht gezeigt) ab.

Vorzugsweise ist der Winkel Á so klein wie möglich. In diesem Fall kann die ausgekoppelte Strahlung gerade noch relativ ungestört einseitig neben dem Spiegel 4a vorbeilaufen. Der Winkel Á ist dann in der Grössenordnung des Oeffnungswinkels, unter dem der Spiegel 4a vom beugenden Spiegel 4b aus gesehen wird (d.h. abhängig vom Verhältnis von Spiegeldurchmesser zu Spiegelabstand). Typischerweise liegt er in der Grössenordnung von 20° - 30°.

Ein Vorteil eines derart minimalen Winkels besteht darin, dass die Stützkonstruktion 7 für die Auskopplung nur eine relativ kurze, d.h. näherungsweise radial verlaufende Bohrung aufweisen muss und somit nicht stärker als unbedingt nötig geschwächt wird.

Fig. 3 zeigt andeutungsweise einen Ausschnitt aus einer mit einem Hologramm 12 versehene Spiegelfläche 8b. Die Spiegelfläche 8b steht im wesentlichen senkrecht zur Resonatorachse 5. Das Hologramm 12 wird durch eine Struktur der Spiegelfläche 8b verkörpert. Die Beschaffenheit der Struktur hängt im konkreten Fall von der eintreffenden und den reflektierten Wellen ab, insbesondere von deren Wellenlänge, von der Form deren Wellenfronten, von er Intensitätsverteilung (Verhältnis von der aus dem Resonator ausgekoppelten zu der darin gespeicherten Energie) sowie deren Ausbreitungsrichtungen (z.B. Winkel Á). Die Struktur lässt sich im allgemeinen nicht durch einfache, geometrische Parameter wie z.B. Dicke d oder Periode L beschreiben.

Umfassend kann das Hologramm 12 z.B. wie folgt beschrieben werden:

1. Die eintreffende Welle ist ein Gauss'scher Mode des Resonators und trifft im wesentlichen senkrecht zur Spiegelfläche (Hologrammebene) auf.

2. Der Hauptteil (z.B. 99%) der eintreffenden Welle wird als Gauss'scher Mode in entgegengesetzter Richtung reflektiert (d.h. in Richtung der Resonatorachse 5).

3. Ein kleiner Teil (z.B. 1%) der eintreffenden Welle wird als Gauss Welle unter einem Winkel Á (d.h. in Richtung der Auskopplungsachse 10) gestreut. Wenn die Gauss'schen Wellen eindeutig bestimmt sind, dann ist damit auch das Hologramm 12 eindeutig bestimmt.

Die Parameter des Hologramms haben zudem einen Einfluss auf die Eigenschaften des Resonators. Ueber den Anteil der ausgekoppelten Leistung kann nämlich die Güte des Resonators eingestellt werden. Auf diese Weise wird das Gyrotron für den vorgesehenen Leistungsbereich optimiert.

Für den Fall Gauss'scher Wellen lässt sich in bezug auf die geometrischen Dimensionen der Struktur sagen, dass die Dicke d (Tiefe der Struktur) und die Periode L typischerweise in der Grössenordnung einer Wellenlänge der gewünschten Strahlung liegt und dass keine scharfen Kanten auftreten. Bei Wellenlängen im mm-Bereich können somit geometrische Dimensionen in der Grössenordnung von einigen zehntel bis zu wenigen Millimetern vorkommen.

Fig. 4 schliesslich zeigt eine schematische Frontansicht eines runden Spiegels. Das Hologramm zum Auskoppeln der gewünschten Gauss'schen Wellen ist angedeutet durch mehrere, nebeneinander verlaufende, gleichartige, gekrümmte Linien, welche strukturelle Erhebungen veranschaulichen. Die Erhebungen sind typischerweise in kleinen Bezirken, nicht aber über das ganze Hologramm hinweg periodisch.

Zum Herstellen eines erfindungsgemässe Hologramms wird mit Vorteil ein Computer eingesetzt. Mit diesem wird die konkrete Struktur der Spiegelfläche bei Vorgabe der oben erläuterten Parameter des Hologramms berechnet. Mit Hilfe von Werkzeugmaschinen wird sodann die berechnete Struktur auf die Spiegelfläche übertragen. Dieses Herstellungsverfahren macht von der Tatsache Gebrauch, dass die Dimension der holografischen Struktur in der Grössenordnung von etwa 1/10 mm liegt.

Es ist jedoch auch möglich mittels mm-Wellen-Fotografie das Hologramm aufzunehmen. Dabei wird analog zur optischen Holografie der Gauss'sche Mode des Resonators mit der auszukoppelnden Gauss Welle zur Interferenz gebracht und das resultierende Interferenzmuster fotografisch festgehalten.

Im folgenden sollen noch kurz einige weitere Aufführungsformen der Erfindung angesprochen werden.

Bisher wurde stets von einem Hologramm auf einem sphärisch gekrümmten Spiegel gesprochen. Die Erfindung beschränkt sich aber nicht auf solche Spiegel. Es ist durchaus auch möglich einen planen Spiegel zu verwenden und die Wirkung einer sphärischen Krümmung im Hologramm zu integrieren.

Ein anderer wichtiger Punkt ist die Anzahl der Streurichtungen. Bis anhin wurde zwar immer betont, dass die Auskopplung nur in genau einer Richtung erfolgt. Dies entspricht aber nur einer bevorzugten Ausführungsform. Es liegt nämlich durchaus auch im Rahmen der Erfindung, wenn das Hologramm in genau zwei, oder allgemein in genau n vorgegebene Auskopplungsrichtungen Gauss Wellen streut. Eine mehrfache Auskopplung kann z.B. dann von Vorteil sein, wenn es darum geht, die durch die zulässige Belastbarkeit der HF-Fenster beschränkte Ausgangsleistung zu einer hohen Gesamtleistung des Gyrotrons zu vervielfachen. Nach wie vor ist es dabei wichtig für einen hohen Wirkungsgrad, dass nur Strahlung in Richtung der z.B. zwei vorgegebenen Auskopplungsachsen gestreut wird.

Bei einem Hologramm mit zwei Auskopplungsrichtungen werden die beiden Auskopplungsachsen vorzugsweise symmetrisch zur Resonatorachse gelegt.

Die Gesamtleistung kann auch noch auf andere Weise vervielfacht werden, nämlich indem beide Spiegel 4a, 4b des Resonators mit je einem geeigneten Hologramm versehen werden. So können beispielsweise mit zwei Hologrammen mit je genau einer Auskopplungsrichtung zwei Gauss Wellen extrahiert werden.

Grundsätzlich beschränkt sich die Erfindung nicht auf Gauss'sche Wellenformen. In völlig analoger Weise können für andere Anwendungszwecke auch andere, ja sogar beliebige, Wellenformen ausgekoppelt werden.

Zusammenfassend kann festgestellt werden, dass durch die erfindungsgemässe Art der Auskopplung Millimeter- und Submillimeterwellen von hoher Dauerstrichleistung erzeugt werden können. Die so erzeugten Wellen lassen sich ohne nennenswerte Verluste mit herkömmlichen Wellenleitern zu entfernten Verbrauchern befördern.

## BEZEICHNUNGSLISTE

1 - Elektronenstrahl;
2 - Elektronenstrahlachse;
3a, 3b = Spule;
4a, 4b = Spiegel;
5 - Resonatorachse;
6 - Mittel zum Erzeugen eines Elektronenstrahls;
7 - Stützkonstruktion;
8a, 8b = Spiegelfläche;
9 - Gefäss;
10 - Auskopplungsachse;
11 - HF-Fenster;
12 - Hologramm;

## Ansprüche

1. Quasi-optisches Gyrotron umfassend
a) erste Mittel zum Erzeugen eines in Richtung einer Elektronenstrahlachse laufenden Elektronenstrahls,
b) zweite Mittel zum Erzeugen eines parallel zur Elektronenstrahlachse ausgerichteten statischen Magnetfeldes, durch welches die Elektronen des Elektronenstrahls zur Gyration gezwungen werden,
c) einen quasi-optischen Resonator, welcher zwei auf einer senkrecht zur Elektronenstrahlachse ausgerichteten Resonatorachse einander gegenüberliegend angeordnete Spiegel aufweist, in welchem Resonator durch die Gyration der Elektronen ein elektromagnetisches Wechselfeld angeregt wird,
d) dritte Mittel zum Auskoppeln elektromagnetischer Strahlung aus dem Resonator,
dadurch gekennzeichnet, dass
e) die dritten Mittel mindestens ein Hologramm umfassen, welches mindestens eine Hologramm auf einer Spiegelfläche eines der beiden Spiegel des Resonators ist und so beschaffen ist, dass die auszukoppelnde Strahlung in Richtung mindestens genau einer Auskopplungsachse gestreut wird, wobei die mindestens genau eine Auskopplungsachse mit der Resonatorachse einen vorgegebenen Winkel Á verschieden von null einschliesst.

2. Quasi-optisches Gyrotron nach Anspruch 1, dadurch gekennzeichnet, dass die Auskopplungsachse und die Resonatorachse in einer gemeinsamen Ebene liegen, welche im wesentlichen senkrecht steht zur Elektronenstrahlachse.

3. Quasi-optisches Gyrotron nach Anspruch 1, dadurch gekennzeichnet, dass das Hologramm einer Ueberlagerung zweier Gauss Wellen unter dem vorgegebenen Winkel Á in einer Hologrammebene entspricht, wobei eine der beiden Gauss Wellen im wesentlichen senkrecht zur Hologrammebene auftrifft.

4. Quasi-optisches Gyrotron nach Anspruch 1, dadurch gekennzeichnet, dass das Hologramm so ausgebildet ist, dass es nur in Richtung genau einer Auskopplungsachse elektromagnetische Strahlung streut.

5. Quasi-optisches Gyrotron nach Anspruch 1, dadurch gekennzeichnet, dass das Hologramm so ausgebildet ist, dass es nur in Richtung genau zweier Auskopplungsachsen elektromagnetische Strahlung streut.

6. Quasi-optisches Gyrotron nach Anspruch 1, dadurch gekennzeichnet, dass der Winkel Á zwischen Auskopplungsachse und Resonatorachse so klein wie möglich ist, sodass die ausgekoppelte Strahlung neben dem gegenüberliegenden zweiten Spiegel des Resonators gerade noch im wesentlichen ungestört passieren kann.

7. Quasi-optisches Gyrotron nach Anspruch 1, dadurch gekennzeichnet, dass das Hologramm so ausgebildet ist, dass einige wenige Prozent des im Resonator schwingenden Wechselfeldes ausgekoppelt werden.

8. Quasi-optisches Gyrotron nach Anspruch 1, dadurch gekennzeichnet, dass das Hologramm eine lateral und tiefenmodulierte elektrisch leitende Spiegelfläche mit einer Strukturgrösse in der Grössenordnung einer Wellenlänge der elektromagnetischen Strahlung ist.

9. Quasi-optisches Gyrotron nach Anspruch 1, dadurch gekennzeichnet, dass

    a) die zweiten Mittel zum Erzeugen eines statischen Magnetfeldes zwei auf der Elektronenstrahlachse angeordnete Spulen in Helmholtz-Anordnung umfassen,

    b) der quasi-optische Resonator zwischen den beiden Spulen untergebracht ist und

    c) Resonator und Auskopplungsachse in einer gemeinsamen Ebene senkrecht zur Elektronenstrahlachse liegen.

10 Quasi-optisches Gyrotron nach Anspruch 1, dadurch gekennzeichnet, dass die Spiegelfläche im wesentlichen senkrecht zur Resonatorachse steht und sphärisch gekrümmt ist, und dass die Spiegel im wesentlichen kreisförmig sind.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | BROWN BOVERI REVIEW. vol. 6, Juni 1987, BADEN CH Seiten 303 - 307; H. G. MATHEUS et al.: "The gyrotron - A key component of high-power microwave transmitters" * Seite 305, Absatz 3; Figuren 2b, 8 * * Seite 306, letzter Absatz * | 1, 4 | H01J25/02 |
| D,A | | 2, 9, 10 | |
| D,Y | US-A-3609585 (HUFNAGEL) * Zusammenfassung; Figuren * * Spalte 1, Zeilen 50 - 60 * * Spalte 2, Zeilen 15 - 65 * * Spalte 3, Zeilen 4 - 11 * * Spalte 4, Zeilen 28 - 30; Ansprüche * | 1, 4 | |
| D,A | | 2, 10 | |
| A | OPTICS LETTERS. vol. 12, no. 2, Februar 1987, NEW YORK US Seiten 84 - 86; DE SILVESTRI et al.: "Radially variable reflectivity output coupler of novel design for unstable resonators" * Zusammenfassung * * Seite 85, rechte Spalte, Zeilen 6 - 10 * | 1, 3, 10 | |
| A | APPLIED OPTICS. vol. 26, no. 18, 15 September 1987, NEW YORK US Seiten 3947 - 3953; R. K. KOSTUK et al.: "Design considerations for holographic optical interconnects" * Zusammenfassung; Figuren 2, 4B * * Absatz 1 * * Seite 3948, linke Spalte, Zeilen 8 - 15 * | 5-8, 10 | |

RECHERCHIERTE SACHGEBIETE (Int. Cl.5 )

H01J
G02B
H01S

Der vorliegende Recherchenbericht wurde für alle Patentansprüche erstellt

| Recherchenort | Abschlußdatum der Recherche | Prüfer |
|---|---|---|
| DEN HAAG | 19 OKTOBER 1990 | MARTIN Y VICENTE M. |